(19) Europäisches Patentamt
European Patent Office
Office européen des brevets

(11) **EP 4 625 867 A1**

(12) **EUROPEAN PATENT APPLICATION**
published in accordance with Art. 153(4) EPC

(43) Date of publication:
**01.10.2025 Bulletin 2025/40**

(21) Application number: **24795632.9**

(22) Date of filing: **12.03.2024**

(51) International Patent Classification (IPC):
**H04L 5/00** (2006.01)

(52) Cooperative Patent Classification (CPC):
**H04J 13/00; H04L 5/00; H04L 27/26**

(86) International application number:
**PCT/CN2024/081151**

(87) International publication number:
**WO 2024/222248 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.04.2023 CN 202310469248**

(71) Applicant: **ZTE Corporation
Shenzhen, Guangdong 518057 (CN)**

(72) Inventors:
• **YANG, Weiwei
  Shenzhen, Guangdong 518057 (CN)**
• **DAI, Bo
  Shenzhen, Guangdong 518057 (CN)**
• **LIU, Kun
  Shenzhen, Guangdong 518057 (CN)**

(74) Representative: **Ziebig Hengelhaupt Intellectual
Property Attorneys
Patentanwaltskanzlei PartGmbB
Leipziger Straße 49
10117 Berlin (DE)**

(54) **DATA TRANSMISSION METHOD AND APPARATUS, AND STORAGE MEDIUM**

(57) Provided are a data transmission method and apparatus, and a storage medium. The data transmission method comprises: preprocessing first data to obtain second data, on the basis of the second data and a sequence set, obtaining a first sequence, and mapping the first sequence to a time domain resource for sending.

FIG. 4

**Description**

The present disclosure claims the priority of Chinese Patent Application No. 202310469248.1 filed on April 23, 2023, the entire content of which is incorporated in this application by reference.

TECHNICAL FIELD

The present disclosure relates to the field of communication technologies, and in particular, to a data transmission method, a data transmission apparatus, and a storage medium.

BACKGROUND

In some technologies, the main technology to improve data channel coverage is repetitions of the transmission, including a symbol-based repetition, a slot-based repetition, and a subframe-based repetition.

SUMMARY

In an aspect, embodiments of the present disclosure provide a data transmission method. The data transmission method includes:

preprocessing first data to obtain second data;
obtaining a first sequence based on the second data and a sequence set, and mapping the first sequence onto a time domain resource for sending.

In another aspect, the embodiments of the present disclosure further provide a data transmission method. The data transmission method includes:
receiving a first sequence, obtaining second data according to the first sequence and a mapping relationship between the second data and a sequence set, and preprocessing the second data to obtain first data.
In yet another aspect, the embodiments of the present disclosure provide a data transmission apparatus. The data transmission apparatus includes:

a processing module, configured to preprocess first data to obtain second data;
a communication module, configured to obtain a first sequence based on the second data and a sequence set, and map the first sequence onto a time domain resource for sending.

In yet another aspect, the embodiments of the present disclosure further provide a data transmission apparatus. The data transmission apparatus includes:
a communication module, configured to receive a first sequence, obtain second data according to the first sequence and a mapping relationship between the second data and a sequence set, and preprocess the second data to obtain first data.
In yet another aspect, the embodiments of the present disclosure provide a communication apparatus. The communication apparatus includes: a memory and a processor; where the memory is coupled with the processor; the memory is configured to store computer program instructions executable by the processor; and the processor, when executing the computer program instructions, implements the data transmission method of any one of the above embodiments.
In yet another aspect, the embodiments of the present disclosure provide a computer readable storage medium. Computer program instructions are stored on the computer readable storage medium, and the computer program instructions, when being executed on a computer (such as a communication apparatus or a signal transmission apparatus), implement the data transmission method of any one of the above embodiments.
In yet another aspect, the embodiments of the present disclosure provide a computer program product. The computer program product includes computer program instructions, and the computer program instructions, when being executed, implement the data transmission method of any one of the above embodiments.

BRIEF DESCRIPTION OF THE DRAWINGS

FIG. 1 is a structural schematic diagram of a radio frame according to some embodiments.
FIG. 2 is a structural schematic diagram of a slot configuration according to some embodiments.

FIG. 3 is a schematic diagram of an architecture of a communication system according to some embodiments.
FIG. 4 is a flowchart of a data transmission method according to some embodiments.
FIG. 5 is a flowchart of another data transmission method according to some embodiments.
FIG. 6 is a structural schematic diagram of a data transmission apparatus according to some embodiments.
FIG. 7 is a structural schematic diagram of another data transmission apparatus according to some embodiments.
FIG. 8 is a structural schematic diagram of a communication apparatus according to some embodiments.

DETAILED DESCRIPTION

The technical solutions of the embodiments of the present disclosure will be clearly and completely described in conjunction with the drawings in the embodiments of the present disclosure, and obviously, the described embodiments are only some of the embodiments of the present disclosure, not all of the embodiments. All other embodiments obtained based on the embodiments in the present disclosure by those ordinary skilled in the art without making creative efforts fall within the protection scope of the present disclosure.

In the description of the present disclosure, unless otherwise stated, the character "/" means "or", and for example, A/B may represent A or B. "And/or" herein only an associated relationship for describing associated objects, representing that there may be three relationships, and for example, A and/or B may represent: only A, only B, and A and B. In addition, "at least one" means one or more, and "a/the plurality of / multiple" means two or more. The expressions "first", "second" or the like do not limit the quantity and the order of execution, and the expressions "first", "second" or the like are not necessarily different.

It should be noted that in the present disclosure, the expression "for example" or "exemplarily", etc., is used to represent an example, an illustration or an explanation. Any embodiment or design scheme described with "exemplarily" or "for example", etc., in the present disclosure should not be interpreted as more preferred or advantageous than other embodiments or design schemes. Specifically, the use of the expression such as "exemplarily" or "for example", etc., is intended to present related concepts in detail.

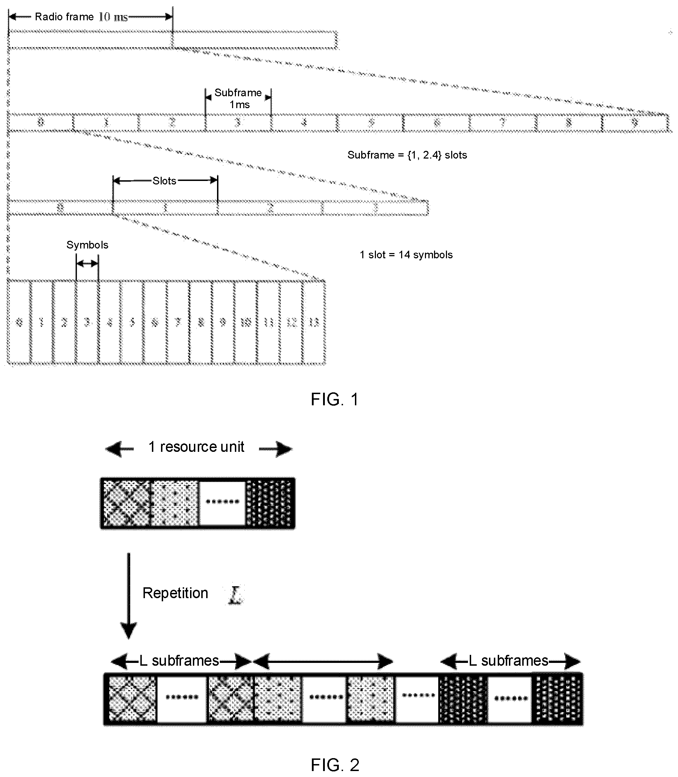

Exemplarily, FIG. 1 provides a structural schematic diagram of a radio frame. As shown in FIG. 1, a radio frame in NR is 10 milliseconds (ms), and the radio frame may be divided into 10 subframes, and each subframe is 1 ms. Each subframe includes several time slots, and each time slot is composed of 14 orthogonal frequency division multiplexing (OFDM) symbols (under a normal cycle prefix).

In some technologies, the main technology to improve data channel coverage is the repetition of the time domain, e.g., including a symbol-based repetition, a slot-based repetition, and a subframe-based repetition. For example, in a narrow band internet of things (NB-IoT) system, to ensure a coverage requirement of an internet of things terminal, a subframe-based repetition technology is used in an uplink data transmission. Taking an example in which the number of repetitions is 128, data is encoded, modulated, and discrete fourier transform (DFT) transformed, to be mapped onto a time-frequency resource by repeating 128 times in subframe units when mapping.

Referring to FIG. 2, in technologies of the narrowband internet of things and the internet of things evolved based on LTE, to support larger coverage, the terminal maps uplink data after being encoded, scrambled, modulated and transmission precoded, onto the time-frequency resource, and when the number of repetitions is greater than 0, the mapping is repeated in subframe/slot units when mapping.

However, when the data channel coverage is improved by the repetition, only one terminal's data can be transmitted on these resources. With the increase of the number of terminals, improving the multiplexing capacity while improving the coverage, is an issue that needs to be solved urgently.

In view of this, the present disclosure provides a data transmission method, including: preprocessing first data to obtain second data; obtaining a first sequence based on the second data and a sequence set, and mapping the first sequence onto a time domain resource for sending. This improves the transmission data coverage while improving the time multiplexing capacity, by a different sequence selected based on data of each terminal of multiple terminals being mapped onto the same time-frequency resource for transmitting.

The technical solutions provided by the embodiments of the present disclosure may be applied to various mobile communication networks, such as the new radio (New Radio, NR) mobile communication network using the fifth generation mobile communication technology (5th generation mobile communication technology, 5G), future mobile communication networks or multiple communication technology fusion systems, etc., which are not limited to the embodiments of the present disclosure.

A network architecture of a mobile communication network (including but not limited to 3G, 4G, 5G, and future mobile communication networks) in the present disclosure may include a first communication node and a second communication node. In some examples, the first communication node may be a base station, and the second communication node may be a terminal. In other examples, the first communication node may be a terminal, and the second communication node may be a base station. In yet other examples, in a device-to-device communication scenario, both the first communication node and the second communication node may be terminals. The embodiments of the present disclosure are not limited thereto.

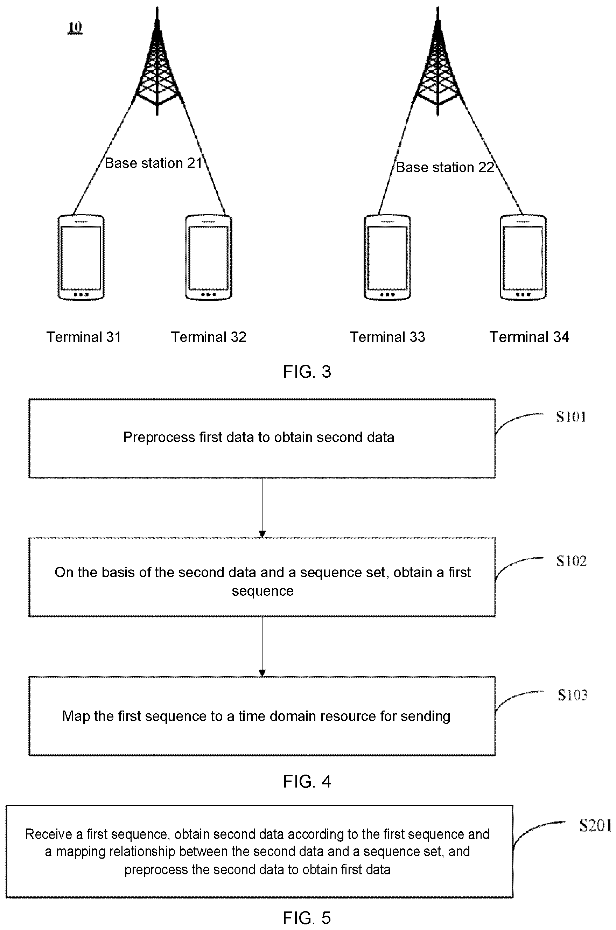

Exemplarily, taking an example in which the first communication node is the base station and the second communication node is the terminal, FIG. 3 illustrates a schematic diagram of an architecture of a communication system provided in the embodiments of the present disclosure. As shown in FIG. 3, a communication system 10 includes multiple base stations (e.g., base station 21 and base station 22) and multiple terminals (e.g., terminal 31, terminal 32, terminal 33, and terminal 34). The multiple base stations and multiple terminals may be communicatively connected.

Exemplarily, taking an example in which the network-side device is the base station and the receiving side device is the terminal, FIG. 3 illustrates a schematic diagram of an architecture of a communication system provided in the embodiments of the present disclosure. As shown in FIG. 3, a communication system 10 includes multiple base stations (e.g., base station 21 and base station 22) and multiple terminals (e.g., terminal 31, terminal 32, terminal 33, and terminal 34). The multiple base stations and multiple terminals may be communicatively connected.

In some embodiments, the base station is used to provide radio access services for multiple terminals. For example, a base station provides a service coverage area (also referred to as a cell). A terminal entering this area may communicate with the base station via a wireless signal, so as to receive a radio access service provided by the base station. There may be overlaps between service coverage areas of base station 21, and a terminal in an overlapping area may receive wireless signals from multiple base stations.

In some embodiments, the base station may connect to multiple terminal devices, for example, base station 21 connects to terminal 31 and terminal 32. Terminal 31 and terminal 32 may be located in the same cell, or terminal 31 and terminal 32 may be located in different cells. That is, a base station may provide network services to terminals of a cell, or may also provide network services to terminals of multiple cells simultaneously.

In some embodiments, the base station may be a base station in LTE, long term evolution advanced (LTEA), or an evolutional base station (evolutional node B, eNB or eNodeB), a base station in the 5G network, or a base station in future communication systems, and so on, and the base station may include various base stations, micro base stations, home base stations, remote radio device, reconfigurable intelligent surfaces (RIS), routers, wireless fidelity (WIFI) devices, or various network side devices such as primary cells and secondary cells, etc.

In some embodiments, the terminal may be a device with a wireless transceiver function, which may be deployed on land (including indoor or outdoor, handheld, worn, or vehicle-mounted); may be deployed on water (e.g., a ship, etc.); or the terminal may also be deployed in the air (e.g., an airplane, a balloon, a satellite, etc.). The terminal may be a mobile phone, a tablet computer (Pad), a computer with a wireless transceiver function, a virtual reality (VR) terminal, an augmented reality (AR) terminal, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, etc. The embodiments of the present disclosure do not limit the application scenarios. The terminal sometimes may also be referred to as a user, user equipment (UE), access terminal, UE unit, UE station, mobile station, mobile platform, remote station, remote terminal, mobile device, UE terminal, wireless communication device, UE agent, UE apparatus, etc., which is not limited to the embodiments of the present disclosure.

It should be noted that FIG. 3 is only an exemplary framework diagram, and the number of devices and the names of the respective devices included in FIG. 3 are not limited, and in addition to the devices shown in FIG. 3, the communication system may also include other devices (such as a core network device).

The application scenarios for the embodiments of the present disclosure are not limited. The system architectures and service scenarios described in the embodiments of the present disclosure are intended to more clearly illustrate the technical solutions of the embodiments of the present disclosure, and do not limit the technical solutions provided in the embodiments of the present disclosure, and those ordinary skilled in the art may know that with the evolution of the network architectures and the emergence of new service scenarios, the technical solutions provided in the embodiments of the present disclosure may also be applicable for similar technical problems.

The embodiments of the present disclosure provide a data transmission method, which is applicable to a first communication node, as shown in FIG. 4. The method includes the following contents.

S101, preprocess first data to obtain second data.

In some embodiments, the preprocessing includes at least one of: first encoding, or scrambling.

In some embodiments, the first encoding includes at least one of: tail-biting convolutional code (TBCC), Polar code, Turbo code, and Reed-Muller encoding.

In some embodiments, a length of the second data is determined based on at least one of: a number of resources of the time domain resource, a first length, a preset value, and a value configured by signaling.

In some embodiments, the first length is determined in a predefined or signaling configured manner.

In some embodiments, the length of the second data is equal to the first length.

In other embodiments, the length of the second data is a product of the first length and the preset value.

In some embodiments, the length of the second data is determined as follows:

$$K = N/L \times m - 1.$$

N is a number of OFDM symbols contained in the time domain resource, L is the first length, and m is the preset value or a value configured by signaling.

Exemplarily, assuming that 8 radio frames are pre-allocated and the radio frame is repeated 128 times in subframe units to obtain the time domain resource, so the number N of OFDM symbols contained in the time domain resource is $8 \times 10 \times 128 \times 14$, L=140, m=2, then the length K of the second data is $8 \times 10 \times 128 \times 14/140 \times 2-1 = 2047$.

For another example, assuming that 8 radio frames are pre-allocated and the radio frame is repeated 128 times in subframe units to obtain the time domain resource, so the number N of OFDM symbols contained in the time domain resource is $8 \times 10 \times 128 \times 14$, L=140, m=1, and the length K of the second data is $8 \times 10 \times 128 \times 14/140 \times 1-1=4095$.

S102, obtain a first sequence based on the second data and a sequence set.

S103, map the first sequence onto the time domain resource for sending.

A length of a sequence in the sequence set is equal to the first length.

In some embodiments, the second data is divided into bit combinations; a second sequence corresponding to each bit combination is determined based on each bit combination in the bit combinations, and a mapping relationship between the bit combination and a sequence in the sequence set; and the first sequence is obtained based on the second sequence. In this way, for the second data to be transmitted by different terminals, it is divided into different bit combinations; based on a value of each bit combination of the bit combinations and the mapping relationship between the bit combination and a sequence in the sequence set, the first sequences to be transmitted by different terminals are determined.

In some embodiments, the first data is preprocessed to obtain the second data $\{S_0, S_1, S_2, ..., S_k\}$; based on the second data and the sequence set, the first sequence

$$\{Z_{(S_0 S_1 \ldots S_{m-1})}, \ Z_{(S_m S_{m+1} \ldots S_{2m-1})}, \ \ldots \ldots, \ Z_{(S_{m*(\lceil k/m \rceil -1)} S_{m*(\lceil k/m \rceil -1)+1} \ldots S_{m*(\lceil k/m \rceil)-1})}\}$$ is obtained,

where m is a positive integer greater than or equal to 1, and k is a positive integer.

In some embodiments, the mapping relationship between the bit combination and the sequence in the sequence set is determined in a predefined and/or signaling configured manner.

In some embodiments, the bit combination is composed of m bits, and a value of m is a predefined value and/or indicated by signaling.

In some embodiments, the sequence set contains $2^m$ sequences. For example, when m=2, the sequence set contains 4 sequences. When m=1, the sequence set contains 2 sequences.

Exemplarily, assuming that the number of OFDM symbols in the time domain resource is $8 \times 10 \times 128 \times 14$, L=140, and m=2, then the sequence set contains 4 ZC sequences with a length of 140, i.e., $\{Z_0, Z_1, Z_2, Z_3\}$. The first data is TBCC encoded and scrambled to obtain the second data, and the length of the second data is $K=8 \times 10 \times 128 \times 14/140 \times 2-1=2047$, and the second data is represented as $\{S_0, S_1, S_2, ..., S_{2047}\}$. The second data is divided into multiple bit combinations, each bit combination of which contains 2 bits, i.e., $S_i S_{i+1}$, where i is a non-negative integer less than K. Table 1 provides an example of a mapping relationship between the bit combination and a sequence in the sequence set. Based on the mapping relationship in Table 1, the first sequence is obtained as $\{Z_{(S0, S1)}, Z_{(S2, S3)}, \ldots Z_{(S2046, S2047)}\}$. The $\{Z_{(S0, S1)}, Z_{(S2, S3)}, \ldots Z_{(S2046, S2047)}\}$ is mapped onto $8 \times 10 \times 128 \times 14$ OFDM symbols for sending.

Table 1 Mapping relationship between the bit combination and a sequence in the sequence set

| $S_i S_{i+1}$ | $Z_{(S_i S_{i+1})}$ |
|---|---|
| 00 | $Z_0$ |
| 01 | $Z_1$ |
| 10 | $Z_2$ |
| 11 | $Z_3$ |

As an example, continuing to refer to Table 1, assuming that the first data is TBCC encoded to obtain the second data of $\{10011100, \bullet\bullet\bullet, 01\}$, then the corresponding first sequence is $\{Z_2, Z_1, Z_3, Z_0, ..., Z_1\}$.

As another example, assuming that the number of OFDM symbols contained in the time domain resource is $8 \times 10 \times 128 \times 14$, L=140, m=2, and the sequence set contains 4 ZC sequences with a length of 70. The first data is TBCC encoded and scrambled to obtain the second data, and the length of the second data is $K=8 \times 10 \times 128 \times 14/140 \times 1-1=4095$, and the second data is represented as $\{S_0, S_1, S_2, \ldots, S_{4095}\}$. The second data is divided into multiple bit combinations, each bit combination of which contains 2 bits. Based on the mapping relationship between the value of the bit combination and the sequence in the sequence set provided in Table 1, the first sequence is obtained as $\{Z_{(S0, S1)}, Z_{(S2, S3)}, ......Z_{(S4094, S4095)}\}$. The $\{Z_{(S0, S1)}, Z_{(S2, S3)}, ......Z_{(S4094, S4095)}\}$ is mapped onto $8 \times 10 \times 128 \times 14$ OFDM symbols for sending.

Exemplarily, assuming that the number of OFDM symbols in the time domain resource is $8 \times 10 \times 128 \times 14$, L=70, m=1, and the sequence set contains 2 ZC sequences $\{Z_0, Z_1\}$ with a length of 70. The length of the second data is $K=8 \times 10 \times 128 \times 14/70 \times 1-1=2047$, and the second data is $\{S_0, S_1, S_2, ......, S_{2047}\}$; and the second data is divided into multiple bit combinations, each bit combination of which contains 1 bit, i.e., $S_i$, where i is a non-negative integer less than K. Table 2 provides another example of a mapping relationship between the bit combination and a sequence in the sequence set. Based on the mapping relationship in Table 2, the first sequence is obtained as $\{Z_{(S0)}, Z_{(S1)}, ......Z_{(S2047)}\}$. The $\{Z_{(S0)}, Z_{(S1)}, ......Z_{(S2047)}\}$ is mapped onto $8 \times 10 \times 128 \times 14$ OFDM symbols for sending.

Table 2 a mapping relationship between the bit combination and a sequence in the sequence set

| $S_i$ | $Z_{(Si)}$ |
|---|---|
| 0 | $Z_0$ |
| 1 | $Z_1$ |

In some embodiments, the sequence in the sequence set is composed of a third sequence, or obtained by truncating repetitions of a third sequence.

In some embodiments, in a case where a length of the third sequence is equal to the first length, the sequence in the sequence set is the third sequence.

Exemplarily, assuming that the first length is 140 and the third sequence is a ZC sequence with a length of 140, the sequence in the sequence set may be the third sequence, i.e., the sequence set contains multiple ZC sequences with a length of 140.

In some embodiments, in a case where the length of the third sequence is less than the first length, the third sequence is repeated and then truncated to obtain the sequence in the sequence set.

Exemplarily, assuming that the first length is 140 and the third sequence is a binary sequence with a length of 16, the third sequence is repeated 140/16 times and then truncated to obtain the sequence in the sequence set. Table 3 provides 4 binary sequences with a length of 32, which are A1, A2, A3, and A4, respectively.

Table 3 Binary sequence

| A1 | 1001101010111000 |
|---|---|
| A2 | 1101011001000101 |
| A3 | 0110010101000111 |
| A4 | 0010100110111010 |

For another example, assuming that the first length is 70 and the third sequence is a binary sequence with a length of 32, the third sequence is repeated 70/32 times and then truncated to obtain the sequence in the sequence set. Table 4 provides 2 binary sequences with a length of 32, which are B1 and B2, respectively.

Table 4 Binary sequence

| B1 | 10100100101110110001011100111000 |
|---|---|
| B2 | 01011011010001001110100011000111 |

In some embodiments, the third sequence is at least one of: a ZC sequence, a pseudo-random (pseudo noise, PN) sequence, a binary sequence, and an orthogonal sequence.

In some embodiments, in a case where third sequence includes the ZC sequence, a root sequence index and/or a cyclic shift value of the ZC sequence are determined at least according to a first index.

Exemplarily, assuming that the first index is x, in a case where the third sequence contains the ZC sequence, the root sequence index of the ZC sequence is determined as follows:

$$x_{\mathrm{p}}\left(m\right)=e^{-j\frac{\pi \mathrm{p}m\left(m+1\right)}{N_{\mathrm{ZC}}^{\mathrm{RS}}}}, \quad 0\le m\le 139.$$

The function is p=f(x) function, and p is the root sequence index corresponding to the ZC sequence.

For example, assuming that the first index is x, and m=2, so the sequence set corresponding to the terminal contains 4 ZC sequences, then, the sequence set composed of 4 ZC sequences is determined according to p=f(x), and root sequence indexes p corresponding to the 4 ZC sequences are {x, hx, 2hx, 3hx}, respectively. h is a pre-set value, or a value indicated by the base station via signaling.

For example, assuming that the first index is x, and m=2, the sequence set corresponding to the terminal contains 4 ZC sequences. For example, cyclic shifts corresponding to the 4 sequences are {x×q, 2×x×q, 3×x×q, 4×x×q}, respectively, where q is a cyclic shift interval. A value of the cyclic shift interval q is determined by presetting, or determined according to at least one of a root sequence length, m, and the first length.

In some embodiments, in a case where the third sequence includes the PN sequence, an initial value of the PN sequence is determined at least according to the first index.

Exemplarily, assuming that the first index is x, and m=2, initial values of 4 PN sequences are determined according to the first index, and the sequence set composed of the 4 PN sequences is determined as $\{Z_0, Z_1, Z_2, Z_3\}$, according to the initial values.

In some embodiments, in a case where the third sequence includes the orthogonal sequence, an index of the orthogonal sequence is determined at least according to the first index.

In some embodiments, the first index is determined by at least one of: a value configured by signaling, a cell radio network temporary identifier (c-RNTI) corresponding to a terminal, a terminal index, a group index corresponding to the terminal, a starting subframe of the time-domain resource, a starting radio frame of the time-domain resource, and a frequency domain position related to the time-domain resource.

In some embodiments, in a case where R sequence sets are configured at a higher layer, the R sequence sets are determined according to the first index, and a correspondence between the first index and the R sequence sets, where R is a positive integer.

In some embodiments, the first sequence is performed by second encoding and then modulated into M modulated symbols, where M is an integer greater than 1; and the M modulated symbols are mapped onto the time-domain resource for sending.

In some embodiments, the modulated symbol includes an amplitude shift keying (ASK) modulated symbol, a frequency shift keying (FSK) modulated symbol, or an OFDM symbol.

In some embodiments, the second encoding includes pulse interval encoding (PIE), Manchester encoding, or Bi-phase space encoding.

Exemplarily, It is assumed that the terminal obtains the first index as x, the first length as 70, the third sequence as the binary sequence, and m=1, by higher layer signaling. It is assumed that the binary sequence corresponding to x is shown in Table 4. The binary sequence is repeated $\lceil 70/32 \rceil$ times and then truncated into a sequence set composed of sequences with a length of 70, because the length of the binary sequence provided in Table 4 is 32. The first data is Polar encoded to obtain the second data $\{S_0, S_1, S_2, ......, S_k\}$, where a value of k is a preset value. Based on the second data and the sequence set, the first sequence is obtained as $\{Z_{(S0)}, Z_{(S1)}, ......Z_{(Sk-1)}\}$. The $\{Z_{(S0)}, Z_{(S1)}, ......Z_{(Sk-1)}\}$ is Manchester encoded, and then the corresponding symbols are modulated according to 1-bit binary amplitude shift keying (on-off keying, OOK), or the corresponding symbols are modulated according to M-bit OOK, and then mapped onto ASK modulated symbols for sending. The OOK is a special case of the ASK modulation, and is a modulation process of taking an amplitude as 0 and another amplitude as non-zero.

For another example, it is assumed that the terminal obtains the first index as x, the first length as 70, the third sequence as the binary sequence, and m=1, by higher layer signaling. It is assumed that the binary sequence corresponding to x is shown in Table 4. The binary sequence is repeated $\lceil 70/32 \rceil$ times and then truncated into a sequence set composed of sequences with a length of 70, because the length of the binary sequence provided in Table 4 is 32. The first data is Polar encoded to obtain the second data $\{S_0, S_1, S_2, ......, S_k\}$, where a value of k is a preset value. Based on the second data and the sequence set, the first sequence is obtained as $\{Z_{(S0)}, Z_{(S1)}, ......Z_{(Sk-1)}\}$, and the $\{Z_{(S0)}, Z_{(S1)}, ......Z_{(Sk-1)}\}$ is Manchester encoded, and then the corresponding symbols are modulated according to 1-bit FSK, or the corresponding symbols are modulated according to M-bit FSK, and then mapped onto FSK modulated symbols for sending.

In some embodiments, in a case where the first sequence is mapped onto the time domain resource for sending, each element of the first sequence corresponds to a cyclic prefix.

In some embodiments, in a case where the first sequence is mapped onto the time domain resource for sending, multiple elements of the first sequence correspond to a cyclic prefix.

In some embodiments, in a case where the terminal receives a signaling indication, it preprocesses first data to obtain second data; obtains a first sequence based on the second data and a sequence set, and maps the first sequence onto the time domain resource for sending; otherwise, maps the first data, after being encoded, scrambled and modulated, onto the time domain resource for sending.

In some embodiments, in a case where the configured number of repetitions is greater than a preset threshold, the first data is preprocessed to obtain second data; based on the second data and the sequence set, a first sequence is obtained, and the first sequence is mapped onto the time domain resource for sending; otherwise, the first data, after being encoded, scrambled and modulated, is mapped onto the time domain resource for sending.

In some embodiments, in a case where a coverage level is less than a preset coverage level, the first data is preprocessed to obtain second data; based on the second data and the sequence set, a first sequence is obtained, and the first sequence is mapped onto the time domain resource for sending; otherwise, the first data, after being encoded, scrambled and modulated, is mapped onto the time domain resource for sending.

Based on this, the first data is preprocessed, so as to select its corresponding first sequence, and then the first sequence is mapped onto the time domain resource for sending. In this way, it improves the transmission data coverage, while improving the multiplexing capacity, by a different sequence being selected for each terminal of multiple terminals and then mapped onto the same time-frequency resource for sending.

The embodiments of the present disclosure provide a data transmission method, which is applicable for a second communication node. As shown in FIG. 5, the method includes the following contents.

S201, receive a first sequence, obtain second data according to the first sequence and a mapping relationship between the second data and a sequence set, and preprocess the second data to obtain first data.

In some embodiments, the mapping relationship between the second data and the sequence set includes: a mapping relationship between a bit combination included in the second data and a sequence in the sequence set, where the mapping relationship is determined in a predefined and/or signaling configured manner.

In some embodiments, the bit combination is composed of m bits, and a value of m is a predefined value and/or indicated by signaling.

In some embodiments, a length of the second data is determined based on at least one of: a number of resources of the time domain resource, a first length, a preset value, and a value configured by signaling. The first length is determined in a predefined or signaling configured manner.

In some embodiments, a sequence in the sequence set is a third sequence, or is obtained by truncating repetitions of a third sequence.

In some embodiments, the third sequence is at least one of: a ZC sequence, a PN sequence, a binary sequence, and an orthogonal sequence.

In some embodiments, in a case where the third sequence includes the ZC sequence, a root sequence index and/or a cyclic shift value of the ZC sequence are determined according to a first index.

In a case where the third sequence includes the PN sequence, an initial value of the PN sequence is determined according to the first index.

In a case where the third sequence includes the orthogonal sequence, an index of the orthogonal sequence is determined according to the first index.

In some embodiments, the first index is determined by at least one of: a value configured by signaling, a c-RNTI corresponding to a terminal, a terminal index, a group index corresponding to the terminal, a starting subframe of the time domain resource, a starting radio frame of the time domain resource, and a frequency domain position related to the time domain resource.

In some embodiments, the preprocessing includes at least one of: first encoding, or scrambling.

In some embodiments, the first encoding includes at least one of: tail-biting convolutional code (TBCC), Polar code, Turbo code and Reed-Muller encoding.

In some embodiments, one or more elements of the first sequence correspond to a cyclic prefix.

In some embodiments, M modulated symbols are received, and the M modulated symbols are obtained by modulating the first sequence which has been performed by second encoding, where M is an integer greater than 1.

In some embodiments, the modulated symbol includes an ASK modulated symbol, an FSK modulated symbol, or an OFDM symbol.

In some embodiments, the second encoding includes pulse interval encoding (PIE), Manchester encoding, or Bi-phase space encoding.

Based on this, the first sequence is received, second data is obtained according to the first sequence and the mapping relationship between the second data and the sequence set, and the second data is preprocessed to obtain first data. In this way, different sequences are selected for different data of terminals, and the data transmission is implemented by receiving the corresponding sequence. This improves multiplexing capacity, while reducing interference between data corresponding to different terminals, and improving the accuracy of the received data.

The above introduces the solutions of the embodiments of the present disclosure mainly from the perspective of the methods. A data transmission apparatus is also illustrated below, for performing the data transmission method in any of the above embodiments and possible implementations thereof. It can be understood that the data transmission apparatus includes the corresponding hardware structures and/or software modules for performing the respective functions, to implement the demodulation reference signal transmission method; and those skilled in the art should easily recognize that the present disclosure can be implemented in the form of hardware or a combination of hardware and computer software, in conjunction with the algorithmic steps of the respective examples described in the embodiments of the present disclosure. Whether a certain function is performed by hardware or computer software-driven hardware depends on the specific application and design constraints of the technical solutions. Professional technicians may use different methods to implement the described functions, for each specific application, but such an implementation should not be considered beyond the scope of the present disclosure.

In the embodiments of the present disclosure, the data transmission apparatus may be divided into functional modules according to the above-mentioned method embodiments, and for example, each functional module may be divided corresponding to each function, or two or more functions may be integrated into one functional module. The above-mentioned integrated module may be implemented in the form of hardware or may be implemented in the form of software. It should be noted that the division of modules in the embodiments of the present disclosure is illustrative, and is merely a kind of logical functional division, and there may be other division methods in actual implementations. The example in which each functional module may be divided corresponding to each function is taken for explanation below.

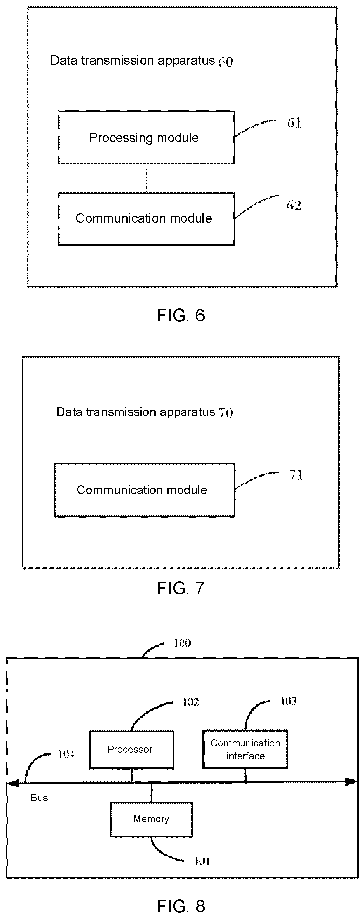

FIG. 6 is a data transmission apparatus according to some embodiments, which is applicable for a first communication node. The data transmission apparatus 60 includes: a processing module 61 and a communication module 62.

The processing module 61 is configured to preprocess first data to obtain second data.

The communication module 62 is configured to obtain a first sequence based on the second data and a sequence set, and map the first sequence onto a time domain resource for sending.

In some embodiments, the processing module 61 is configured to divide the second data into bit combinations; determine a second sequence corresponding to each bit combination, based on a value of each bit combination in the bit combinations, and a mapping relationship between the value of the bit combination and a sequence in the sequence set; and obtain the first sequence based on the second sequence.

In some embodiments, the mapping relationship between the value of the bit combination and the sequence in the sequence set is determined in a predefined and/or signaling configured manner.

In some embodiments, the bit combination is composed of m bits, and a value of m is a predefined value and/or indicated by signaling.

In some embodiments, a length of the second data is determined according to at least one of: a number of resources of the time domain resource, a first length, a preset value, and a value configured by signaling.

In some embodiments, the first length is determined in a predefined and/or signaling configured manner.

In some embodiments, the sequence in the sequence set is a third sequence, or is obtained by truncating repetitions of a third sequence.

In some embodiments, the third sequence is at least one of: a ZC sequence, a PN sequence, a binary sequence, and an orthogonal sequence.

In some embodiments, the processing module 61 is configured to:

in a case where the third sequence includes the ZC sequence, determine a root sequence index and/or a cyclic shift value of the ZC sequence according to a first index;
in a case where the third sequence includes the PN sequence, determine an initial value of the PN sequence according to the first index;
in a case where the third sequence includes the orthogonal sequence, determine an index of the orthogonal sequence according to the first index.

In some embodiments, the first index is determined by at least one of: a value configured by signaling, a c-RNTI corresponding to a terminal, a terminal index, a group index corresponding to the terminal, a starting subframe of the time domain resource, a starting radio frame of the time domain resource, and a frequency domain position related to the time domain resource.

In some embodiments, the preprocessing includes at least one of: first encoding, or scrambling.

In some embodiments, the first encoding includes at least one of: tail-biting convolutional code (TBCC), Polar code, Turbo code, and Reed-Muller encoding.

In some embodiments, one or more elements in the first sequence correspond to a cyclic prefix.

In some embodiments, the communication module 62 is configured to perform second encoding on the first sequence to modulate into M modulated symbols, M being an integer greater than 1; and map the M modulated symbols onto the time domain resource for sending.

In some embodiments, the modulated symbol includes an ASK modulated symbol, an FSK modulated symbol or an OFDM symbol.

In some embodiments, the second encoding includes pulse interval encoding (PIE), Manchester encoding, or Bi-phase space encoding.

FIG. 7 is a data transmission apparatus according to some embodiments, which is applicable for a second communication node. The data transmission apparatus 70 includes: a communication module 71.

In some embodiments, the communication module 71 is configured to receive a first sequence, obtain second data according to the first sequence and a mapping relationship between the second data and a sequence set, and preprocess the second data to obtain first data.

In some embodiments, the mapping relationship between the second data and the sequence set includes: a mapping relationship between a bit combination included in the second data and a sequence in the sequence set, where the mapping relationship is determined in a predefined and/or signaling configured manner.

In some embodiments, the bit combination is composed of m bits, and a value of m is a predefined value and/or indicated by signaling.

In some embodiments, a length of the second data is determined based on at least one of: a number of resources of the time domain resource, a first length, a preset value, and a value configured by signaling. The first length is determined in a predefined or signaling configured manner.

In some embodiments, a sequence in the sequence set is a third sequence, or is obtained by truncating repetitions of a third sequence.

In some embodiments, the third sequence is at least one of: a ZC sequence, a PN sequence, a binary sequence, and an orthogonal sequence.

In some embodiments, in a case where the third sequence includes the ZC sequence, a root sequence index and/or a cyclic shift value of the ZC sequence are determined according to a first index.

In a case where the third sequence includes the PN sequence, an initial value of the PN sequence is determined according to the first index.

In a case where the third sequence includes the orthogonal sequence, an index of the orthogonal sequence is determined according to the first index.

In some embodiments, the first index is determined by at least one of: a value configured by signaling, a c-RNTI corresponding to a terminal, a terminal index, a group index corresponding to the terminal, a starting subframe of the time domain resource, a starting radio frame of the time domain resource, and a frequency domain position related to the time domain resource.

In some embodiments, the preprocessing includes at least one of: first encoding, or scrambling.

In some embodiments, the first encoding includes at least one of: tail-biting convolutional code (TBCC), Polar code, Turbo code, and Reed-Muller encoding.

In some embodiments, one or more elements of the first sequence correspond to a cyclic prefix.

In some embodiments, the communication module 71 is configured to receive M modulated symbols, where the M modulated symbols are obtained by modulating the first sequence which has been performed by second encoding, and M is an integer greater than 1.

In some embodiments, the modulated symbol includes an ASK modulated symbol, an FSK modulated symbol, or an OFDM symbol.

In some embodiments, the second encoding includes pulse interval encoding (PIE), Manchester encoding, or Bi-phase space encoding.

In a case of implementing the functions of the integrated modules mentioned above in the form of hardware, the embodiments of the present disclosure further provide a structure of a communication apparatus, and the communication apparatus is configured to perform the data transmission method provided by the embodiments of the present disclosure. As shown in FIG. 8, the communication apparatus 100 includes a communication interface 103, a processor 102, and a bus 104. In some embodiments, the communication apparatus 100 may further include a memory 101.

The processor 102 may implement or perform various exemplary logical blocks, modules and circuits described in conjunction with the embodiments of the present disclosure. The processor 102 may be a central processing unit, a general-purpose processor, a digital signal processor, an application specific integrated circuit, a field programmable gate array or other programmable logic devices, a transistor logic device, a hardware component or any combination thereof. The processor 102 may implement or perform various exemplary logical blocks, modules and circuits described in conjunction with the embodiments of the present disclosure. The processor 102 may also be a combination that implements computing functions, for example, including a combination of one or more microprocessors, a combination of a digital signal processor (DSP) and a microprocessor, or the like.

The communication interface 103 is configured to connect with other devices via a communication network. The communication network may be an Ethernet, a radio access network, a wireless local area network (WLAN), or the like.

The memory 101 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As an implementation, the memory 101 may exist independently of the processor 102, and the memory 101 may be connected to the processor 102 via the bus 104 and is used for storing instructions or program codes. The processor 102, when calling and executing the instructions or program codes stored in the memory 101, is capable of implementing the data transmission method provided by the embodiments of the present disclosure.

In another implementation, the memory 101 may also be integrated with the processor 102.

The bus 104 may be an extended industry standard architecture (EISA) bus or the like. Buses 104 may be divided into address buses, data buses, control buses, and the like. For the convenience of representation, only one thick line is used in FIG. 8 for representation, but it does not mean that there is only one bus or one type of bus.

Some embodiments of the present disclosure provide a computer-readable storage medium (e.g., a non-transitory computer-readable storage medium), and the computer-readable storage medium has stored computer program instructions therein that, when running on a computer, cause the computer to perform the data transmission method as described in any of the above-mentioned embodiments.

In an exemplary implementation, the computer may be the above-mentioned data transmission apparatus, and the present disclosure do not limit the form of the computer.

In some examples, the above-mentioned computer-readable storage medium may include, but be not limited to, a magnetic storage device (e.g., a hard disk, a floppy disk or a magnetic tape, etc.), an optical disk (e.g., a Compact Disk (CD) or a Digital Versatile Disk (DVD), etc.), a smart card and a flash memory device (e.g., an Erasable Programmable Read-Only Memory (EPROM), a card, a stick or a key driver, etc.). The various computer-readable storage media described in the present disclosure may represent one or more devices and/or other machine-readable storage media for storing information. The term "machine-readable storage medium" may include, but be not limited to, a radio channel and various other media capable of storing, containing, and/or carrying instructions and/or data.

The embodiments of the present disclosure provide a computer program product including instructions, and the computer program product, when running on a computer, causes the computer to perform the data method as described in any embodiment of the above-mentioned embodiments.

The foregoing is only the specific implementations of the present disclosure, but the protection scope of the present disclosure is not limited thereto, and any changes or substitutions within the scope of the technologies disclosed in the present disclosure should be covered within the protection scope of the present disclosure. Therefore, the protection scope of the present disclosure should be based on the protection scope of claims.

**Claims**

1. A data transmission method, **characterized by** comprising:

   preprocessing first data to obtain second data;
   obtaining a first sequence based on the second data and a sequence set, and mapping the first sequence onto a time domain resource for sending.

2. The method according to claim 1, wherein obtaining the first sequence based on the second data and the sequence set, comprises:

   dividing the second data into bit combinations;
   determining a second sequence corresponding to each bit combination, based on a value of each bit combination in the bit combinations, and a mapping relationship between the bit combination and a sequence in the sequence set; and
   obtaining the first sequence based on the second sequence.

3. The method according to claim 2, wherein the mapping relationship between the bit combination and the sequence in the sequence set is determined in a predefined and/or signaling configured manner.

4. The method according to claim 2, wherein the bit combination is composed of m bits, and a value of m is a predefined value and/or indicated by signaling.

5. The method according to claim 1, wherein a length of the second data is determined according to at least one of: a number of resources of the time domain resource, a first length, a preset value, and a value configured by signaling.

6. The method according to claim 5, wherein the first length is determined in a predefined and/or signaling configured manner.

7. The method according to claim 2, wherein the sequence in the sequence set is a third sequence, or is obtained by truncating repetitions of a third sequence.

8. The method according to claim 7, wherein the third sequence is at least one of: a ZC sequence, a pseudo-random (PN) sequence, a binary sequence, or an orthogonal sequence.

9. The method according to claim 8, further comprising:

in a case where the third sequence comprises the ZC sequence, determining a root sequence index and/or a cyclic shift value of the ZC sequence according to a first index;
in a case where the third sequence comprises the PN sequence, determining an initial value of the PN sequence according to the first index;
in a case where the third sequence comprises the orthogonal sequence, determining an index of the orthogonal sequence according to the first index.

10. The method according to claim 9, wherein the first index is determined by at least one of: a value configured by signaling, a cell radio network temporary identifier (c-RNTI) corresponding to a terminal, a terminal index, a group index corresponding to the terminal, a starting subframe of the time domain resource, a starting radio frame of the time domain resource, or a frequency domain position related to the time domain resource.

11. The method according to claim 1, wherein the preprocessing comprises at least one of: first encoding, or scrambling.

12. The method according to claim 11, wherein the first encoding comprises at least one of: tail-biting convolutional code (TBCC), Polar code, Turbo code, and Reed-Muller encoding.

13. The method according to claim 1, wherein one or more elements in the first sequence correspond to a cyclic prefix.

14. The method according to claim 1, wherein mapping the first sequence onto the time domain resource for sending, further comprises:

performing second encoding on the first sequence to modulate into M modulated symbols, M being an integer greater than 1; and
mapping the M modulated symbols onto the time domain resource for sending.

15. The method according to claim 14, wherein the modulated symbol comprises an ASK modulated symbol, an FSK modulated symbol, or an OFDM symbol.

16. The method according to claim 14, wherein the second encoding comprises pulse interval encoding (PIE), Manchester encoding, or Bi-phase space encoding.

17. A data transmission method, **characterized by** comprising:
receiving a first sequence, obtaining second data according to the first sequence and a mapping relationship between the second data and a sequence set, and preprocessing the second data to obtain first data.

18. The method according to claim 17, wherein the mapping relationship between the second data and the sequence set comprises: a mapping relationship between a bit combination comprised in the second data and a sequence in the sequence set, wherein the mapping relationship is determined in a predefined and/or signaling configured manner.

19. The method according to claim 18, wherein the bit combination is composed of $m$ bits, and a value of $m$ is a predefined value and/or indicated by signaling.

20. The method according to claim 17, wherein a length of the second data is determined based on at least one of: a number of resources of the time domain resource, a first length, a preset value, and a value configured by signaling, wherein the first length is determined in a predefined or signaling configured manner.

21. The method according to claim 17, wherein a sequence in the sequence set is a third sequence, or is obtained by truncating repetitions of a third sequence.

22. The method according to claim 21, wherein the third sequence is at least one of: a ZC sequence, a PN sequence, a binary sequence, and an orthogonal sequence.

23. The method according to claim 17, wherein the preprocessing comprises at least one of: first encoding, or scrambling.

24. The method according to claim 23, wherein the first encoding comprises at least one of: tail-biting convolutional code (TBCC), Polar code, Turbo code, and Reed-Muller encoding.

25. A communication apparatus, **characterized by** comprising: a memory and a processor; wherein the memory is coupled with the processor; the memory is configured to store instructions executable by the processor; and the processor, when executing the instructions, performs the method according to any one of claims 1 to 24.

26. A computer readable storage medium, **characterized in that** computer instructions are stored on the computer readable storage medium, and the computer instructions, when being executed on a communication apparatus, cause the communication apparatus to perform the method according to any one of claims 1 to 24.

Radio frame 10 ms

Subframe 1ms

Subframe = {1, 2.4} slots

Slots

1 slot = 14 symbols

Symbols

FIG. 1

1 resource unit

Repetition $L$

L subframes

L subframes

FIG. 2

10

Base station 21

Base station 22

Terminal 31        Terminal 32        Terminal 33        Terminal 34

FIG. 3

Preprocess first data to obtain second data
S101

On the basis of the second data and a sequence set, obtain a first sequence
S102

Map the first sequence to a time domain resource for sending
S103

FIG. 4

Receive a first sequence, obtain second data according to the first sequence and a mapping relationship between the second data and a sequence set, and preprocess the second data to obtain first data
S201

FIG. 5

Data transmission apparatus 60

Processing module ⌐ 61

Communication module ⌐ 62

FIG. 6

Data transmission apparatus 70

Communication module ⌐ 71

FIG. 7

100

102    103

Processor    Communication interface

104

Bus

Memory

101

FIG. 8

## INTERNATIONAL SEARCH REPORT

International application No.

**PCT/CN2024/081151**

| A. CLASSIFICATION OF SUBJECT MATTER |
|---|
| H04L 5/00(2006.01)i |

According to International Patent Classification (IPC) or to both national classification and IPC

| B. FIELDS SEARCHED |
|---|

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

3GPP, CNTXT, ENTXTC, DWPI, IEEE: 比特, 对应, 映射, 关系, 符号, 覆盖, 加强, 增加, 提升, 时隙, 时域, 序列, 重复, 子帧, bit, correspondence, mapping, relation, symbol, coverage, reinforcement, addition, boost, slot, time domain, sequence, repetition, subframe

| C. DOCUMENTS CONSIDERED TO BE RELEVANT |
|---|

| Category* | Citation of document, with indication, where appropriate, of the relevant passages | Relevant to claim No. |
|---|---|---|
| Y | WO 2022104656 A1 (GUANGDONG OPPO MOBILE TELECOMMUNICATIONS CORP., LTD.) 27 May 2022 (2022-05-27) <br> description, paragraphs 0083-0099, 0127, 0259 and 0279 | 1-26 |
| Y | US 2023064912 A1 (LEI, Jing et al.) 02 March 2023 (2023-03-02) <br> description, paragraph 0006 | 1-26 |
| A | CN 108923885 A (CHONGQING UNIVERSITY OF POSTS AND TELECOMMUNICATIONS) 30 November 2018 (2018-11-30) <br> entire document | 1-26 |
| A | CN 114070529 A (CHINA MOBILE COMMUNICATION CO., LTD., RESEARCH INSTITUTE et al.) 18 February 2022 (2022-02-18) <br> entire document | 1-26 |
| A | WO 2022237675 A1 (HUAWEI TECHNOLOGIES CO., LTD.) 17 November 2022 (2022-11-17) <br> entire document | 1-26 |

☐ Further documents are listed in the continuation of Box C.  ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 May 2024** | **22 May 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

# EP 4 625 867 A1

## INTERNATIONAL SEARCH REPORT
### Information on patent family members

International application No.

**PCT/CN2024/081151**

| Patent document cited in search report | | | Publication date (day/month/year) | Patent family member(s) | | | Publication date (day/month/year) |
|---|---|---|---|---|---|---|---|
| WO | 2022104656 | A1 | 27 May 2022 | CN | 116264867 | A | 16 June 2023 |
| US | 2023064912 | A1 | 02 March 2023 | WO | 2021196166 | A1 | 07 October 2021 |
| | | | | EP | 4128603 | A1 | 08 February 2023 |
| | | | | CN | 115315911 | A | 08 November 2022 |
| CN | 108923885 | A | 30 November 2018 | None | | | |
| CN | 114070529 | A | 18 February 2022 | None | | | |
| WO | 2022237675 | A1 | 17 November 2022 | CN | 115334663 | A | 11 November 2022 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310469248